# EUROPÄISCHE PATENTSCHRIFT

(11) **EP 2 532 985 B1**
(45) Veröffentlichungstag und Bekanntmachung des Hinweises auf die Patenterteilung: **22.01.2014**
(21) Anmeldenummer: 11169055.8
(22) Anmeldetag: 08.06.2011
(51) Int. Cl.: F24J 2/46

(54) **Sonnenkollektor**
Solar panel
Collecteur solaire

(43) Veröffentlichungstag der Anmeldung: 12.12.2012
(73) Patentinhaber: KBB Kollektorbau GmbH, 12439 Berlin (DE)
(72) Erfinder: Fintelmann, Stephan, 12435 Berlin (DE)
(74) Vertreter: Siekmann, Gunnar

(56) Entgegenhaltungen:
- DE-A1- 2 650 143
- DE-A1-102008 008 015
- FR-A2- 2 418 423

## Beschreibung

Gegenstand der Erfindung ist ein Sonnenkollektor mit mindestens einer Wanne und einer transparenten Abdeckung, wobei die Wanne einen flachgeformten Randstreifen zur Aufnahme eines gasdichten Klebers zur Verbindung mit der transparenten Abdeckung aufweist und die Wanne zwei in ihrer Höhe versetzte Randstreifen aufweist, wobei der innere Randstreifen höher ist als der äußere Randstreifen, so dass der Abstand zwischen dem inneren Randstreifen und der oberen Abdeckung kleiner ist als der Abstand zwischen dem äußeren Randstreifen und der Abdeckung.

Der Großteil der handelsüblichen Flachkollektoren besteht meist aus einem kastenförmigen Rahmen, der aus vier einzelnen oder einem durchgehenden Rahmenprofil und einer Bodenplatte ausgebildet wird. In diesen Kasten wird eine Matte aus Stein- bzw. Glaswolle eingelegt. Oberhalb dieser Matte wird ein Absorber eingesetzt, der über eine hochselektive Beschichtung die Energie von Lichtwellen in nutzbare Wärme umwandelt und an angeschweißte Rohre, die von einem Wärmeträgermedium durchströmt werden, abgibt. Abgeschlossen wird die Konstruktion durch eine transparente Abdeckung. Das Wärmeträgermedium wird über ein Rohrleitungssystem vom Kollektor weg zu Wärmetauschern geleitet und anschließend wieder zurück zum Kollektor geführt.

Ein Sonnenkollektor der eingangs genannten Art ist aus der DE 10 2007 053 375 A1 bekannt.

Aus der DE 43 08 960 ist ein gasdichter Flachkollektor bekannt. Dieser unterschiedet sich von dem erstgenannten insbesondere dadurch, dass es ein Flachkollektor ist, während die vorliegende Erfindung einen Sonnenkollektor mit einer tiefgezogenen Wanne betrifft. Diese Kollektoren werden erst nach der Installation auf einem Dach oder einer Freiaufstellung mit einem Edelgas befüllt, wobei alle Kollektoren so miteinander verbunden sind, dass das Gas von einem Kollektor in den nächsten strömt. Da diese Kollektoren nicht dauerhaft geastigt sind, wird dieses Gas mit der Zeit durch die Umgebungsluft ersetzt, was dazu führt, dass der Kollektor in regelmäßigen Abständen abermals mit dem Schutzgas befüllt werden muss. Bekannt sind zudem Sonnenkollektoren nach Art eines Isolierglasfensters. Die ist beispielsweise in der DE 10 2008 008 015 A1 beschrieben. Bei diesen Kollektoren wird ein starres und ein flexibles Rahmenprofil direkt auf den Absorber als auch an die Glasabdeckung geklebt, wodurch einerseits Absorberfläche verloren geht, andererseits sich das Absorberblech bei Erhitzung nicht frei ausdehnen kann.

Eine weitere Vorrichtung ist in der Druckschrift DE 26 50 143 A1 beschrieben. Es wird ein Solarkollektor in flacher Bauweise beschrieben, dessen Rand von einem Außenflansch umgeben ist. Der Außenflansch ist so profiliert, dass die Wanne des Sonnenkollektors einen zu einer Abdeckung erhabenen Randstreifen aufweist. Dieser Randstreifen wird mit der Abdeckung verklebt. Der so entstandene Spalt am äußeren Rand zwischen Außenflansch und der Abdeckung wird ebenfalls mit einem Kleber verschlossen.

Aus der FR 2 418 423 A2 ist ein Sonnenkollektor bekannt, der aus einem flachen, rechteckigen Behälter aufgebaut ist. Der Behälter besteht aus einer tiefgezogenen Metallfolie und ist mit einem Wärmeschutz versehen. Im Inneren des Behälters ist ein Rohrstück angeordnet, durch das eine Flüssigkeit zirkuliert, die von der Sonneneinstrahlung erwärmt wird. Die Abdeckung des Sonnenkollektors wird mit Hilfe eines Klebebandes mit einem Flansch verbunden, der die Wanne umläuft. Die Klebeverbindung wird von einer Dichtung umgeben.

Der Erfindung liegt die Aufgabe zugrunde, einen gasdichten und gleichzeitig kostengünstigen Sonnenkollektor herzustellen.

Die Lösung dieser Aufgabe erfolgt mit einem Sonnenkollektor mit den Merkmalen des Patentanspruchs 1. Vorteilhafte Weiterbildungen der Erfindung sind in den Unteransprüchen beschrieben.

Bei einem Sonnenkollektor mit mindestens einer Wanne, insbesondere einer tiefgezogenen Wanne, und einer transparenten Abdeckung, wobei die Wanne einen flachgeformten Randstreifen zur Aufnahme eines gasdichten Klebers zur Verbindung mit der transparenten Abdeckung aufweist, und die Wanne zwei in ihrer Höhe versetzte Randstreifen aufweist, wobei der innere Randstreifen höher ist als der äußere Randstreifen, so dass der Abstand zwischen dem inneren Randstreifen und der oberen Abdeckung kleiner ist als der Abstand zwischen dem äußeren Randstreifen und der Abdeckung, ist erfindungswesentlich vorgesehen, dass der Kleber durch eine außenseitig zum Kleber angeordnete Silikonversiegelung geschützt ist, und auf dem inneren Randstreifen eine Schicht des gasdichten Klebers und auf dem äußeren Randstreifen eine Schicht der Silikonversiegelung aufgetragen ist. Der Kollektor besitzt eine Wanne, an welcher zwei, in ihrer Höhe versetzte Randstreifen ausgeformt sind. Jene Randstreifen dienen der separaten Aufnahme eines gasdichten Klebers, sowie einer schützenden Silikonversiegelung. Derartige Wannen werden durch ein Tiefziehverfahren hergestellt und können somit herkömmliche Kollektorrahmen aus Aluminiumprofilen kostengünstig ersetzen. Erfindungsgemäß wird ein hermetisch verschlossener, gasdichter Sonnenkollektor mit hohem Wirkungsgrad geschaffen, der durch seine materialarme Bauweise kostengünstig herstellbar ist.

Die benannte Wanne wird mit einem umlaufenden Kleber (vorzugsweise Butylkleber) gasdicht mit einer transparenten Abdeckplatte verklebt und mit einer Silikonumrandung randseitig versiegelt, sodass ein Raum geschaffen werden kann, der in der Lage ist dauerhaft ein Gas mit geringer Wärmeleitfähigkeit einzuschließen.

Der Abstand zwischen dem äußeren Randstreifen und der oberen Abdeckung ist günstigerweise mindestens zweimal, bevorzugt sogar dreimal, und in manchen Ausführungen sogar bevorzugt mindestens viermal so groß wie der Abstand zwischen dem inneren Randstreifen und der oberen Abdeckung. Die tiefgezogene Wanne ist in ihrer Ausdehnung vom tiefsten Punkt, also im größten Abstand zwischen der tiefgezogenen Wanne 2 und der oberen Abdeckung 5 mindestens fünfmal so groß, bevorzugt sogar zehnmal so groß, wie der Abstand zwischen dem äußeren Rand und der oberen Abdeckung.

Eine Dichtung aus einem Butylkleber bzw. gleichartigen Stoffen bietet für den Kollektorbau mehrere positive Eigenschaften. Zum einen kann man durch sie eine dauerhafte, gasdichte Verbindung zwischen verschiedenen Werkstoffen schaffen, zum anderen gleichen sie thermische Spannungen, die zwischen die einzelnen Bauteilen auftreten aus. Nachteilig ist der verhältnismäßig hohe Preis. Silikon dagegen ist günstig, ebenfalls elastisch und hitzebeständig. Allerdings muss Silikon in einer dickeren Schicht aufgetragen werden, um die gleiche Elastizität wie der Kleber zu erreichen.

Die besondere Form des Randes der Wanne bietet den Vorteil, dass der verbindende, gasdichte Kleber und die schützende, elastische Silikonschicht nicht im selben Mengenverhältnis verarbeitet werden müssen, um den Abstand zwischen Abdeckung und Wannenrand zu füllen. Ebenso kann, anders als bei einer Isolierverglasung auf ein Rahmenprofil als Abstandhalter verzichtet werden.

Der Rand der Kollektorwanne zeichnet sich durch einen oberen und einen abgesenkten Randstreifen aus, die über einen schräg bis senkrecht abfallenden Abschnitt mit einander verbunden sind.

Es wird nur eine relativ dünne Schicht Butylkleber auf dem oberen Randstreifen der Wanne aufgetragen und eine dickere Schicht Silikon zwischen der Abdeckung und dem unteren Randstreifen verarbeitet. Wobei das Silikon auf dem unteren Randstreifen ruht.

Dieser spezielle Rand lässt auch eine simple Erweiterung des Kollektors um eine weitere, äußere Wanne zu, die ohne zusätzliche Stützen einen kontinuierlichen Abstand zum Boden und den Seiten der inneren Wanne halten kann. Dies ist möglich, da die beiden Wannen nur an ihren Rändern verbunden sind

Die Abdeckung besteht bevorzugt aus Glas oder einem Kunststoff. Die Wannen, mindestens eine der Wannen besteht bevorzugt aus Metall, Kunststoff, einem Naturmaterial und/oder einer Kombination einer dieser Materialien.
Fig.1: Schematische Darstellung des Querschnitts durch die Längsseite des Kollektorgehäuses.
Fig.2: Ausführungsform des Kollektors mit einer zusätzlichen äußeren Wanne.
Fig.3: Explosionszeichnung des Kollektors.

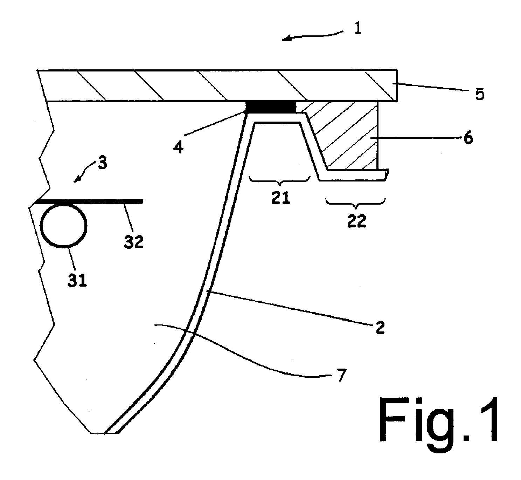

Fig. 1 zeigt einen Teil des Querschnitts des Wannenkollektors und stellt den charakteristischen Rand der Wanne 2 deutlich dar. Der Rand ist so geformt, dass sich zwei in der Höhe versetzte Randstreifen 21, 22 ausbilden, wobei der obere Randstreifen 21 innen und der untere Randstreifen 22 außen verläuft.

Auf dem gesamten oberen Randstreifen 21 ist umlaufend und lückenlos eine Lage gasdichten Klebers 4 aufgetragen, der die Wanne 2 fest mit der transparenten Abdeckung 5 verbindet.

Dabei steht die Abdeckung 5 deutlich sichtbar, seitlich über den oberen Rand 21 der Wanne 2 hinaus.

Der verwendete gasdichte Kleber 4 kann durch seine Elastizität und Hitzebeständigkeit die thermischen Spannungen, die bei der Erhitzung bzw. bei der erneuten Abkühlung auftreten ausgleichen. Des Weiteren gasen keine Stoffe aus dem Kleber aus, sodass keine ungewünschten Ablagerungen auf der Abdeckung 5 den Lichteinfall beeinträchtigen. Zudem kann so eine lang anhaltende Gasundurchlässigkeit gewährleistet werden, da die Zusammensetzung des Klebers 4 sich nicht ändert.

Butylklebstoffe bieten diese Eigenschaften und werden vorzugsweise für diese Abdichtung verwendet.

Um den Kleber 4 vor Umwelteinflüssen zu schützen und den Kollektor 1 zusätzlich zu versiegeln wird der Bereich zwischen der überstehenden Abdeckung 5 und dem unteren Randstreifen 22 mit Silikon 6 ausgefüllt.

Das Silikon 6 muss in einer breiteren Schicht als der Kleber 4 aufgetragen werden um die Spannungen genauso gut aufnehmen zu können wie der Kleber 4.

Daher fällt der Rand der Wanne 2 schräg bis senkrecht ab und bildet an der Wannenkante abermals einen Randstreifen 22 aus, der parallel zum oberen Randstreifen 21 verläuft.

Auf diese Weise entsteht eine breite Nut zwischen Abdeckung 5 und der Wanne 2 in die das Silikon 6 eingebracht werden kann, wobei das Silikon 6 auf dem unteren Randstreifen 21 ruht. Der Vorteil der Formung von zwei, in ihrer Höhe versetzten Randstreifen 21, 22 besteht darin, dass kein zusätzliches umlaufendes Rahmenprofil als Abstandhalter benötigt wird, wie es zum Beispiel bei Mehrscheiben-Isolierglas der Fall ist und demzufolge auch nur eine Schicht des Klebers 6 verarbeitet werden muss. Was zu einer weiteren Kostenersparnis führt. Die zur Sonne gewandte Seite des Kollektors 1 ist durch eine transparente Abdeckung 5, die mit Hilfe des gasdichten Klebers 4 am oberen Rand 21 der Wanne 2 geklebt wird, verschlossen. Eine solche Abdeckung 5 kann entweder aus Glas oder Kunststoff bestehen. Randseitig ist eine Silikonversiegelung 6 verarbeitet, die die auftretenden thermischen Spannungen aufnimmt und abmildert. Auch wird ein direkter Wärmeübergang zwischen Abdeckung 5 und dem Wannenrand vermieden, da Kleber 4 und Silikon 6 eine isolierende Wirkung verfügen. Durch diese Bauweise, unter Verwendung von geeigneten Materialien, entsteht ein Raum 7 der dauerhaft ein Schutzgas mit geringer Wärmeleitfähigkeit einschließen kann. Als Schutzgas eignen sich besonders Edelgase wie Argon oder Xenon, da sie einen geringeren Wärmeleitkoeffizienten aufweisen als Luft. Zudem gehen sie keine chemischen Reaktionen mit den restlichen, verbauten Materialien ein und beugen der Korrosion des Absorbers 3 vor, welcher in diesen in diesen Innenraum 7 eingebracht wird. Es besteht die Möglichkeit eine Wanne 2 zu verwenden, welche zum Innenraum 7 hin verspiegelt, sodass ein Großteil der Wärmestrahlung wieder in Richtung des Absorbers 3 reflektiert und weniger über die Wanne 2 nach außen ableitet wird. Diese Ausführungsform, ist für Kollektoren 1 vorgesehen, die in Regionen mit hoher Durchschnittstemperatur exportiert werden sollen. Eine zusätzliche Isolierung zur sonnenabgewandten Seite des Kollektors 1 ist dabei nicht erforderlich. Die dadurch erzielte Kostenersparnis kann an den Endkunden weitergeben werden. Dies ist besonders in warmen Entwicklungsländern mit geringer Kaufkraft ein wichtiger Aspekt.

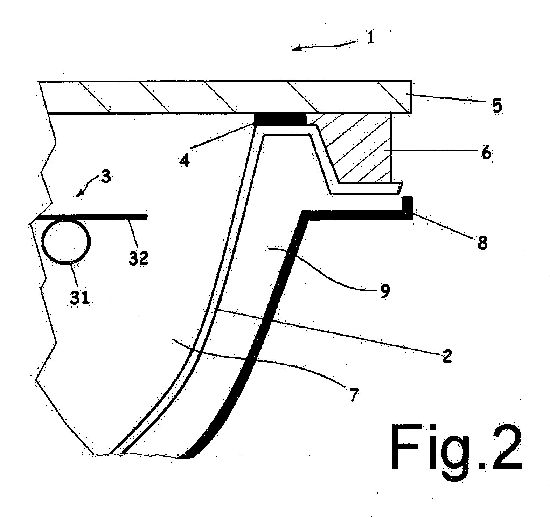

Fig.2 Zeigt einen Teil des Querschnitts der zweiten Ausführungsform des Wannenkollektors 1, wobei eine Wanne 2 so in eine größere Wanne 8 eingelegt wird, dass ein Zwischenraum 9 entsteht. Dieser Zwischenraum entsteht durch die spezielle Ausformung der Wannenränder, welche ineinandergreifen und die innere Wanne 2 so von der äußeren Wanne 8 abstützen, dass ein durchgehender Abstand der Wannenböden und -seiten geschaffen wird. Anschließend werden die beiden Wannen 2, 8 nur an ihren Rändern fest miteinander verbunden. Hierbei sei gesagt, dass zur besseren Darstellung der Konstruktion, die beiden Wannen 2, 8 nicht als verbunden illustriert werden. Zum Minimieren der Wärmeverluste, kann der durch die zwei Wannen gebildete Zwischenraum 9 mit einer wärmeisolierenden Schicht (beispielsweise Glaswolle oder Polyurethan) gefüllt werden. Für Kollektoren, die für den Export in warme Länder vorgesehen sind, ist dies allerdings nicht notwendig. Um die positiven Eigenschaften des Klebers 4 und des Silikons 6 konsequent zu nutzen, kann das Silikon 6 und/oder der Kleber 4 auch zwischen den Rändern der Wannen 2, 8 optional Verwendung finden.

Die Bauweise mit zusätzlicher Wärmedämmung ist für Kollektoren vorgesehen, die in Regionen mit geringerer Durchschnittstemperatur exportiert werden sollen. Eine zusätzliche Isolierung zur sonnenabgewandten Seite mindert die Wärmeverluste und steigert so den Wirkungsgrad. Ein höherer Wirkungsgrad wiederum führt zu einer Heizkosteinsparung bei den Endverbrauchern. Dies ist ein Argument zur Steigerung des Kaufanreizes.

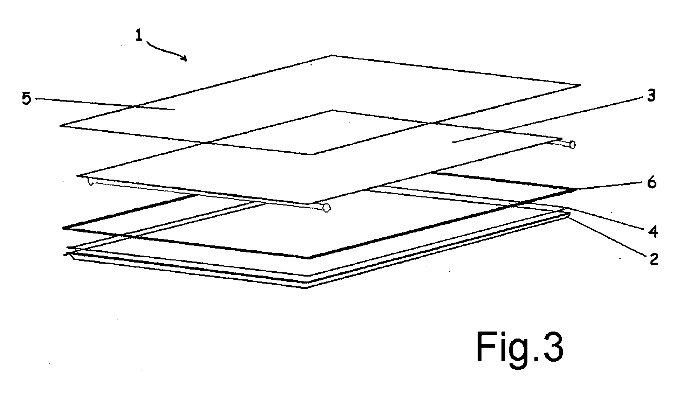

Fig.3 Bildet eine Explosionszeichnung des beanspruchten Kollektors 1, mit den wesentlichsten Bestandteilen ab. Auffällig hierbei ist die geringe Anzahl an Bauteilen, die zur Umsetzung des Kollektors 1 notwendig ist. Dies ermöglicht einen höheren Automatisierungsgrad in der Fertigung, da aufwendige Arbeitsschritte, wie beispielsweise das Zusammensetzen eines kastenförmigen Rahmens entfallen. Ebenfalls von Vorteil ist das geringe Gewicht, das sich durch die Einsparung von Material ergibt. Dies begünstigt eine Minderung der Transportkosten und erleichtert die Installation auf einem Dach.

## Patentansprüche

1. Sonnenkollektor mit mindestens einer Wanne (2) und einer transparenten Abdeckung (5) wobei die Wanne (2) einen flach geformten Randstreifen zur Aufnahme eines gasdichten Klebers (4) zur Verbindung mit der transparenten Abdeckung (5) aufweist und die Wanne (2) zwei in ihrer Höhe versetzte Randstreifen (21, 22) aufweist, wobei der innere Randstreifen (21) höher ist als der äußere Randstreifen (22), so dass der Abstand zwischen dem inneren Randstreifen (21) und der oberen Abdeckung (5) kleiner ist als der Abstand zwischen dem äußeren Randstreifen (22) und der Abdeckung (5),
**dadurch gekennzeichnet,**
**dass** der Kleber (4) durch eine außenseitig zum Kleber (4) angeordnete Silikonversiegelung (6) geschützt ist
und
**dass** auf dem inneren Randstreifen (21) eine Schicht des gasdichten Klebers (4) und auf dem äußeren Randstreifen (22) eine Schicht der Silikonversiegelung (6) aufgetragen ist.

2. Sonnenkollektor nach Anspruch 1, **dadurch gekennzeichnet, dass** die Randstreifen (21, 22) umlaufend ausgebildet sind.

3. Sonnenkollektor nach einem der Ansprüche 1 oder 2, **dadurch gekennzeichnet, dass** der Abstand zwischen dem äußeren Randstreifen (22) und der Abdeckung (5) mindestens zweimal so groß ist wie der Abstand zwischen dem inneren Randstreifen (21) und der oberen Abdeckung (5).

4. Sonnenkollektor nach einem der vorhergehenden Ansprüche, **dadurch gekennzeichnet, dass** in dem durch den Kleber (4) abgedichteten Innenraum (7) ein Schutzgas mit geringer Wärmeleitfähigkeit vorgesehen ist.

5. Sonnenkollektor nach einem der vorhergehenden Ansprüche, **dadurch gekennzeichnet, dass** der Sonnenkollektor eine zusätzliche äußere Wanne (8) aufweist.

6. Sonnenkollektor nach Anspruch 5, **dadurch gekennzeichnet, dass** zwischen der inneren Wanne (2) und der äußeren Wanne (8) ein wärmedämmendes Isoliermaterial vorgesehen ist.

7. Sonnenkollektor nach einem der vorhergehenden Ansprüche, **dadurch gekennzeichnet, dass** die innere Wanne (2) zum Innenraum verspiegelt ist.

8. Sonnenkollektor nach einem der vorhergehenden Ansprüche, **dadurch gekennzeichnet, dass** im inneren des Sonnenkollektors ein Vakuum besteht.

## Claims

1. A solar collector with at least one trough (2) and a transparent cover (5), wherein the trough (2) has a flat formed edge strip for accommodating a gas-tight adhesive (4) for connection to the transparent cover (5) and the trough (2) has two edge strips (21, 22) which are offset in terms of the height thereof, wherein the inner edge strip (21) is higher than the outer edge strip (22), so that the distance between the inner edge strip (21) and the upper cover (5) is smaller than the distance between the outer edge strip (22) and the cover (5),
**characterised**
**in that** the adhesive (4) is protected by means of a silicone sealant (6) arranged externally to the adhesive (4)
and
**in that** a layer of the gas-tight adhesive (4) is applied on the inner edge strip (21) and a layer of the silicone sealant (6) is applied on the outer edge strip (22).

2. The solar collector according to Claim 1, **characterised in that** the edge strips (21, 22) are constructed perimetrically.

3. The solar collector according to one of Claims 1 or 2, **characterised in that** the distance between the outer edge strip (22) and the cover (5) is at least twice as large as the distance between the inner edge strip (21) and the upper cover (5).

4. The solar collector according to one of the preceding claims, **characterised in that** a protective gas with low thermal conductivity is provided in the interior (7) which is sealed by the adhesive (4).

5. The solar collector according to one of the preceding claims, **characterised in that** the solar collector has an additional outer trough (8).

6. The solar collector according to Claim 5, **characterised in that** a heat-insulating insulation material is provided between the inner trough (2) and the outer trough (8).

7. The solar collector according to one of the preceding claims, **characterised in that** the inner trough (2) is mirrored towards the interior.

8. The solar collector according to one of the preceding claims, **characterised in that** there is a vacuum in the interior of the solar collector.

## Revendications

1. Collecteur solaire avec au moins une cuvette (2) et une couverture (5), la cuvette (2) présentant une bande de bordure de forme plate pour recevoir une matière adhésive (4) étanche aux gaz pour raccordement avec la couverture (5) transparente et la cuvette (2) présentant deux bandes de bordure (21, 22) décalées dans leur hauteur, la bande de bordure (21) intérieure étant plus haute que la bande de bordure (22) extérieure de sorte que l'intervalle entre la bande de bordure (21) intérieure et la couverture (5) supérieure est plus petit que l'intervalle entre la bande de bordure (22) extérieure et la couverture (5),
**caractérisé en ce que**
la matière adhésive (4) est protégée par un scellement au silicone (6) disposé extérieurement à la matière adhésive (4)
et
**en ce que** sur la bande de bordure (21) intérieure est appliquée une couche de matière adhésive (4) étanche aux gaz et une couche de scellement au silicone (6) est appliquée sur la bande de bordure (22) extérieure.

2. Collecteur solaire selon la revendication 1, **caractérisé en ce que** les bandes de bordure (21, 22) sont constituées de façon périphérique.

3. Collecteur solaire selon une quelconque des revendications 1 ou 2, **caractérisé en ce que** l'intervalle entre la bande de bordure (22) extérieure et la couverture (5) est au moins deux fois plus grand que l'intervalle entre la bande de bordure (21) intérieure et la couverture (5) supérieure.

4. Collecteur solaire selon une quelconque des revendications précédentes, **caractérisé en ce que** dans l'espace intérieur (7) étanchéifié par la matière adhésive (4) est prévu un gaz de protection avec une conductibilité thermique plus faible.

5. Collecteur solaire selon une quelconque des revendications précédentes, **caractérisé en ce que** le collecteur solaire présente une cuvette (8) extérieure supplémentaire.

6. Collecteur solaire selon la revendication 5, **caractérisé en ce qu'**entre la cuvette (2) intérieure et la cuvette (8) extérieure est prévue un matériau isolant calorifuge.

7. Collecteur solaire selon une quelconque des revendications précédentes, **caractérisé en ce que** la cuvette (2) intérieure est argentée vers l'espace intérieur.

8. Collecteur solaire selon une quelconque des revendications précédentes, **caractérisé en ce qu'**un vide existe à l'intérieur du collecteur solaire.
